(19) Europäisches Patentamt / European Patent Office / Office européen des brevets

(11) **EP 4 086 731 B1**

(12) **EUROPEAN PATENT SPECIFICATION**

(45) Date of publication and mention
of the grant of the patent:
**28.08.2024 Bulletin 2024/35**

(21) Application number: **20942766.5**

(22) Date of filing: **28.06.2020**

(51) International Patent Classification (IPC):
*G06F 3/01* (2006.01)   *G06V 20/59* (2022.01)
*G06V 20/64* (2022.01)   *G06V 40/20* (2022.01)

(52) Cooperative Patent Classification (CPC):
**G06F 3/017; G06V 20/597; G06V 20/64;
G06V 40/28**

(86) International application number:
**PCT/CN2020/098643**

(87) International publication number:
**WO 2022/000149 (06.01.2022 Gazette 2022/01)**

(54) **INTERACTION METHOD AND ELECTRONIC DEVICE**

INTERAKTIONSVERFAHREN UND ELEKTRONISCHE VORRICHTUNG

PROCÉDÉ D'INTERACTION ET DISPOSITIF ÉLECTRONIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**09.11.2022 Bulletin 2022/45**

(73) Proprietor: **Huawei Technologies Co., Ltd.
Shenzhen, Guangdong 518129 (CN)**

(72) Inventors:
• **HAN, Zhenhua
Shenzhen, Guangdong 518129 (CN)**
• **HUANG, Wei
Shenzhen, Guangdong 518129 (CN)**
• **HE, Yanshan
Shenzhen, Guangdong 518129 (CN)**
• **XU, Wenkang
Shenzhen, Guangdong 518129 (CN)**

(74) Representative: **Epping - Hermann - Fischer
Patentanwaltsgesellschaft mbH
Schloßschmidstraße 5
80639 München (DE)**

(56) References cited:
EP-B1- 1 292 877     CN-A- 104 254 817
CN-A- 104 765 444    CN-A- 111 158 491
DE-A1- 102012 019 649  US-A1- 2014 232 631
US-A1- 2016 170 495    US-A1- 2017 024 015
US-A1- 2019 302 895

• **KOTA IRIE ET AL: "3D Measurement by
Distributed Camera System for Constructing an
Intelligent Room", NETWORKED SENSING
SYSTEMS, 2007. INSS '07. FOURTH
INTERNATIONAL C ONFERENCE ON, IEEE, PI, 1
June 2007 (2007-06-01), pages 118 - 121,
XP031131575, ISBN: 978-1-4244-1231-0**

**Description**

**TECHNICAL FIELD**

Embodiments of this application relate to the automotive field, and in particular, to an interaction method, an electronic device, a vehicle, a computer-readable storage medium, and a computer program product.

**BACKGROUND**

With development of modern economies and technologies, automobiles have become most important means of transportation in people's daily life. In order to improve interior experience of a driver or a passenger, a human-computer interaction function is introduced into a cockpit of the automobile. In other words, the driver or the passenger may interact with a device in the automobile by using a gesture in the cockpit of the automobile, to implement different functions. For example, when music is played, the driver or the passenger can switch between songs by using a hand action (for example, sliding to the left or to the right). For another example, when music or radio is paused, the driver or the passenger can resume the play by using a gesture (for example, an OK gesture or a V-shaped gesture).

The hand action or the gesture is recognized by a camera in the cockpit of the automobile. Currently, the camera in the cockpit of the automobile can recognize limited hand actions or gestures. Therefore, fewer and simpler functions are implemented by the driver or the passenger by interacting with the device in the automobile by using the gestures.

Document US 2016/0170495 A1 refers to a gesture recognition apparatus, a vehicle having the same, and a method for controlling the vehicle. A gesture recognition apparatus includes a collection unit having a single sense region, configured to collect information regarding a user gesture conducted in the sense region. The gesture recognition apparatus also includes a controller to detect coordinates and a space vector of the gesture on the basis of a predetermined vehicle coordinate system, and to determine an electronic device from among a plurality of electronic devices on the basis of the gesture coordinates and the space vector to be a gesture recognition object.

Document US 2017/0024015 A1 provides a pointing interaction method, apparatus, and system. The method includes: obtaining a hand image and an arm image; determining spatial coordinates of a fingertip according to the hand image, and determining spatial coordinates of an arm key portion according to the arm image; and performing converged calculation on the spatial coordinates of the fingertip and the spatial coordinates of the arm key portion, to determine two-dimensional coordinates, on a display screen, of an intersection point between fingertip pointing and the display screen. Therefore, the pointing interaction apparatus can implement high-precision pointing only by using the spatial coordinates of the fingertip and the spatial coordinates of the arm key portion, and the pointing has good realtimeness. Document US 2014/0232631 A1 describes a target tracker that evaluates frames of data of one or more targets, such as a body part, body, and/or object, acquired by a depth camera. Positions of the joints of the target(s) in the previous frame and the data from a current frame are used to determine the positions of the joints of the target(s) in the current frame. To perform this task, the tracker proposes several hypotheses and then evaluates the data to validate the respective hypotheses. The hypothesis that best fits the data generated by the depth camera is selected, and the joints of the target(s) are mapped accordingly.

Document US 2019/0302895 A1 discloses a method for hand gesture based human-machine interaction with an automobile which comprises: automatically starting a first mode of control of the automobile, wherein the first mode is associated with a first set of hand gestures, each hand gesture corresponding to a command for controlling the automobile; determining whether a trigger event has been detected; and in response to determining that the trigger event has been detected, performing control of the automobile in a second mode, wherein the second mode is associated with a second set of hand gestures, each hand gesture corresponding to a command for controlling the automobile, and wherein the first set of hand gestures and the corresponding commands are a subset of the second set of hand gestures and the corresponding commands.

Document EP 1 292 877 B1 discloses that by using a pair of cameras, the coordinates of a target on a plane to which a user is pointing may be obtained without three-dimensional modeling and using only data derived from the respective images and no three-dimensional scene data. Each camera views at least four registration points on the plane and an indicator of a direction along which the target lies. A linear transform of a first image maps the planar projection of the direction indication into the second image. The coordinates, in the second image, of the target are determined from the intersection of the projection of the direction in the second image and the transformed projection from the first image. In another embodiment, the directions are mapped to a third reference frame or image by respective linear transforms. An application of the system would allow a user to indicate a location on a projection or television screen using a static pointing gesture. No information about the locations of the cameras is required, so the system can be set up quickly.

Document Kota Irie et al., "3D Measurement by Distributed Camera System for Constructing an Intelligent Room", NETWORKED SENSING SYSTEMS, 2007, INSS '07, June 1, 2007, pages 118-121, discusses to construct an intelligent room in which an operator can control home appliances such as a TV set with intuitive gestures. The room carries CCD cameras with pan, tilt, and zoom functions. An operator makes hand waving and the room detects it. 3D position of the waving hand is measured using the cameras, and then pan, tilt and zooming-up of the cameras are carried out with the 3D information. A hand region is extracted using the color information, and the operator's gestures are recognized. 3D Finger pointing to select an appliance is measured using the cameras. Experiments verify the effectiveness of the proposed 3D measurement methods.

## SUMMARY

Embodiments of this application provide an interaction method, an electronic device, a vehicle, a computer-readable storage medium, and a computer program product. A direction pointed to by a finger can be recognized, so that a user can interact with the device based on the direction pointed to by the finger, to implement rich functions.

To achieve the foregoing objective, the following technical solutions are used in the embodiments of this application. The present invention is defined by the attached set of claims. Embodiments and aspects which are not covered by the invention should be considered as examples useful for understanding the invention.

According to a first aspect, an embodiment of this application provides an interaction method, applied to a smart cockpit, and the method includes: obtaining first spatial coordinates of a finger, where the first spatial coordinates are coordinates in a three-dimensional coordinate system; determining, based on the first spatial coordinates, a first direction to which the finger points; and adjusting a parameter of a target device, or displaying information about a target object based on the first direction.

According to the method in the first aspect, the first spatial coordinates of the finger may be obtained, the first direction to which the finger points may be determined based on the first spatial coordinates, and the parameter of the target device is adjusted or information about the target object is displayed based on the first direction. In the smart cockpit, the finger may point to any direction, and different directions may correspond to different functions of the smart cockpit. For example, the smart cockpit is used as a cockpit of an automobile. The finger pointing upwards may be used to close a window and the finger pointing downwards may be used to open the window. The finger pointing forwards can be used to open a sunroof, and the finger pointing backwards can be used to close the sunroof. Therefore, the different functions can be implemented based on the direction to which the finger points. In addition, compared with that in which a device in the smart cockpit is adjusted based on a gesture, the method provided in this embodiment of this application may further display the information about the target object based on the direction pointed to by the finger. In this way, a human-machine interaction manner is increased.

With reference to the first aspect, in a possible implementation, before the obtaining first spatial coordinates of a finger, the method further includes: obtaining second spatial coordinates of the finger, where the second spatial coordinates are coordinates in the three-dimensional coordinate system; determining, based on the second spatial coordinates, a second direction to which the finger points; and determining a device at the second direction as the target device. According to the foregoing method, before the first spatial coordinates of the finger are obtained, the target device may be first determined based on the second spatial coordinates of the finger, so that the parameter of the target device is subsequently adjusted based on the first direction.

With reference to the first aspect and the various possible implementations of the first aspect, in a possible implementation, the obtaining first spatial coordinates of a finger includes: obtaining the first spatial coordinates of the finger when detecting, within a preset time period, that a direction to which the finger points falls within a first range, where the first range is a range in which an included angle with an initial direction of the finger is less than or equal to a first threshold, and the initial direction is a finger direction that is detected at an initial moment of the preset time period. According to the foregoing method, the first spatial coordinates of the finger may be obtained when it is detected that the direction pointed to by the finger does not change within the preset time period, so as to avoid triggering obtaining the first spatial coordinates of the finger due to a misoperation.

With reference to the first aspect and the various possible implementations of the first aspect, the obtaining first spatial coordinates of a finger includes: obtaining image coordinates of the finger in an image shot by a camera, where the image coordinates of the finger are coordinates in a two-dimensional coordinate system; and obtaining the first spatial coordinates based on the image coordinates of the finger, an intrinsic parameter matrix of the camera, and a physical transformation matrix, where the intrinsic parameter matrix of the camera and the physical transformation matrix are used to indicate a transformation relationship between the two-dimensional coordinate system and the three-dimensional coordinate system. According to the foregoing method, the image coordinates of the finger in the image shot by the camera may be obtained, and the first spatial coordinates are obtained based on the image coordinates of the finger and the transformation relationship between the two-dimensional coordinate system and the three-dimensional coordinate system. In this way, the first direction can be quickly obtained based on the first spatial coordinates.

With reference to the first aspect and the various possible implementations of the first aspect, the method further includes: obtaining image coordinates of a plurality of estimation points and spatial coordinates of the plurality of estimation points in the image shot by the camera, where the image coordinates of the plurality of estimation points are coordinates in the two-dimensional coordinate system, and the spatial coordinates of the plurality of estimation points are coordinates in the three-dimensional coordinate system; and obtaining the physical transformation matrix based on the intrinsic parameter matrix of the camera, the image coordinates of the plurality of estimation points, and the spatial coordinates of the plurality of estimation points. According to the foregoing method, the image coordinates of the plurality of estimation points and the spatial coordinates of the plurality of estimation points may be obtained, and the physical transformation matrix is obtained based on the intrinsic parameter matrix, the image coordinates of the plurality of estimation points, and the spatial coordinates of the plurality of estimation points. In this way, the transformation relationship between the two-dimensional coordinate system and the three-dimensional coordinate system may be learned, and the image coordinates of the finger in the image shot by the camera may be subsequently converted into the first spatial coordinates based on the transformation relationship, so as to determine a direction to which the finger points.

With reference to the first aspect and the possible implementations of the first aspect, in a possible implementation, the camera is a monocular camera, a binocular camera, or a depth camera. According to the foregoing method, images may be shot by a plurality of types of cameras, for example, a monocular camera, a binocular camera, or a depth camera.

With reference to the first aspect and the possible implementations of the first aspect, in a possible implementation, the target object is an object in an interaction area; and the interaction area is an area covered by the first direction. According to the foregoing method, information about the object in the area covered at the first direction may be displayed based on the first direction, so that the user learns the information about the target object, and user experience is improved.

With reference to the first aspect and the possible implementations of the first aspect, in a possible implementation, the two-dimensional coordinate system is a coordinate system corresponding to the camera; and the three-dimensional coordinate system is a coordinate system corresponding to a three-dimensional model of the smart cockpit, or a coordinate system corresponding to a three-dimensional drawing of the smart cockpit. According to the foregoing method, the coordinate system corresponding to the camera may be associated with the coordinate system corresponding to the three-dimensional model of the smart cockpit, or the coordinate system corresponding to the camera may be associated with the coordinate system corresponding to the three-dimensional drawing of the smart cockpit. In this way, the first spatial coordinates may be obtained based on the image coordinates of the finger. With reference to the first aspect and the various possible implementations of the first aspect, in a possible implementation, the smart cockpit is a cockpit in a vehicle, and the adjusting a parameter of a target device based on the first direction includes: adjusting a parameter of a window in the vehicle based on the first direction; or adjusting a parameter of a sunroof in the vehicle based on the first direction; or adjusting a parameter of an air conditioner in the vehicle based on the first direction. According to the foregoing method, the window, the sunroof, and the air conditioner in the vehicle may be adjusted based on a direction to which the finger points. Compared with that in which the foregoing device is adjusted by using a button, hardware costs can be reduced. In addition, a continuous dynamic adjustment is not required when a device in the vehicle is adjusted, and the device can be adjusted in one step through a direction pointed to by using the finger, so to improve user experience. For example, the window can be gradually closed by using the finger pointing upwards until a point where the window is wanted to be closed is reached, and the finger is moved to stop the closing operation.

According to a second aspect, an embodiment of this application provides an electronic device, to implement the method in any one of the first aspect or the possible implementations of the first aspect. The electronic device includes a corresponding unit or component configured to perform the method. The units included in the electronic device may be implemented in a software and/or hardware manner.

According to a third aspect, an embodiment of this application provides an electronic device, including a processor, where the processor is coupled to a memory, the memory is configured to store programs or instructions, and when the programs or the instructions are executed by the processor, the electronic device is enabled to implement the method in any one of the first aspect or the possible implementations of the first aspect.

According to a fourth aspect, an embodiment of this application provides an electronic device. The electronic device is configured to implement the method in any one of the first aspect or the possible implementations of the first aspect. According to a fifth aspect, an embodiment of this application provides a computer-readable medium. The computer-readable medium stores computer programs or instructions, and when the computer programs or instructions are executed, a computer is enabled to perform the method in any one of the first aspect or the possible implementations of the first aspect.

According to a sixth aspect, an embodiment of this application provides a computer program product. The computer program product includes computer program code. When the computer program code is run on a computer, the computer is enabled to perform the method in any one of the first aspect or the possible implementations of the first aspect.

According to a seventh aspect, an embodiment of this application provides a chip, including a processor, where the processor is coupled to a memory, the memory is configured to store programs or instructions, and when the programs or the instructions are executed by the processor, the chip is enabled to implement the method in any one of the first aspect or the possible implementations of the first aspect.

According to an eighth aspect, an embodiment of this application provides a vehicle, including the electronic device according to the second aspect, the electronic device according to the third aspect, the electronic device according to the fourth aspect, or the chip according to the seventh aspect.

It may be understood that any one of the electronic device, the chip, the computer-readable medium, the computer program product, the vehicle, or the like provided above is configured to perform a corresponding method provided above. Therefore, for beneficial effects that can be achieved by the electronic device, the chip, the computer-readable medium, the computer program product, the vehicle, or the like, refer to beneficial effects in the corresponding method. Details are not described herein.

## BRIEF DESCRIPTION OF DRAWINGS

FIG. 1 is a schematic diagram of a transformation relationship between an image coordinate system and a spatial coordinate system according to an embodiment of this application;
FIG. 2 is a schematic diagram of an interaction system according to an embodiment of this application;
FIG. 3 is a schematic diagram of a hardware structure of an electronic device according to an embodiment of this application;
FIG. 4 is a schematic flowchart 1 of an interaction method according to an embodiment of this application;
FIG. 5(a) and FIG. 5(b) each are a schematic diagram of an image shot by a camera according to an embodiment of this application;
FIG. 6 is a schematic diagram 1 of a direction pointed to by a finger according to an embodiment of this application;
FIG. 7(a), FIG. 7(b) and FIG. 7(c) each are a schematic diagram 2 of a direction pointed to by a finger according to an embodiment of this application;
FIG. 8 is a schematic diagram 3 of a direction pointed to by a finger according to an embodiment of this application;
FIG. 9 is a schematic flowchart 2 of an interaction method according to an embodiment of this application;
FIG. 10 is a schematic diagram of an estimation point according to an embodiment of this application;
FIG. 11 is a schematic flowchart 3 of an interaction method according to an embodiment of this application;
FIG. 12 is a schematic flowchart 4 of an interaction method according to an embodiment of this application;
FIG. 13 is a schematic diagram of a structure of an electronic device according to an embodiment of this application; and
FIG. 14 is a schematic diagram of a structure of a chip according to an embodiment of this application.

## DESCRIPTION OF EMBODIMENTS

To facilitate understanding of the solutions in the embodiments of this application, a transformation relationship between an image coordinate system and a spatial coordinate system is first described.

The image coordinate system is a coordinate system established on an image shot by a camera. The image coordinate system may use a center of the image shot by the camera as an origin, and the image coordinate system is a two-dimensional coordinate system. The spatial coordinate system is a coordinate system corresponding to a three-dimensional drawing of a smart cockpit, or a coordinate system corresponding to a three-dimensional model of a smart cockpit. For example, the spatial coordinate system is a coordinate system corresponding to a computer-aided design (computer-aided design, CAD) drawing of the smart cockpit. The spatial coordinate system is a three-dimensional coordinate system. The spatial coordinate system may alternatively be referred to as a coordinate system corresponding to a three-dimensional model of a smart cockpit or a three-dimensional coordinate system.

Further, information about the three-dimensional drawing or information about the three-dimensional model may be pre-stored in a device in the smart cockpit, or may be downloaded from a network. The information about the three-dimensional drawing is used to indicate coordinates of an apparatus or a device in the smart cockpit in the coordinate system corresponding to the three-dimensional drawing. The information about the three-dimensional model of the smart cockpit is used to indicate coordinates of an apparatus or a device in the smart cockpit in the coordinate system corresponding to the three-dimensional model.

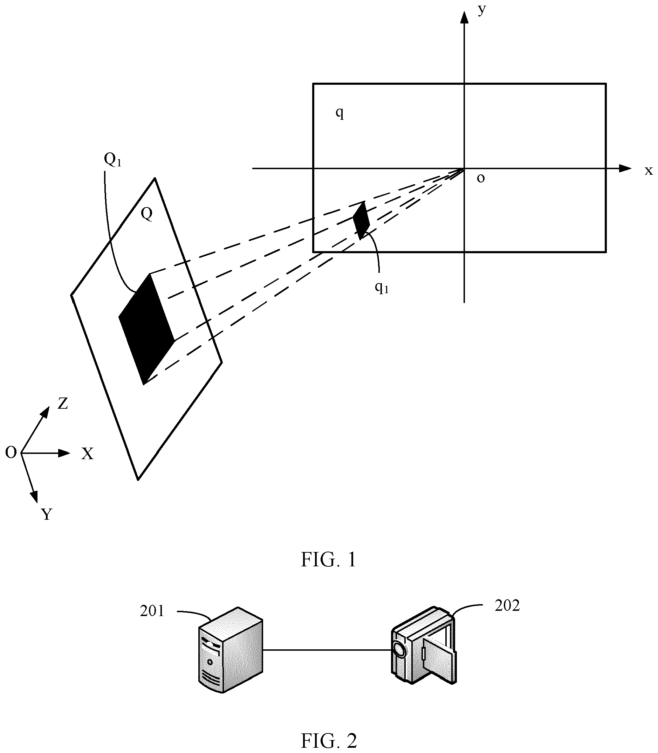

The transformation relationship between the image coordinate system and the spatial coordinate system may be shown in FIG. 1. In FIG. 1, a two-dimensional coordinate system o-xy is an image coordinate system on an image q shot by a camera. An intersection point of an x axis and a y axis is o, that is, o is an origin of the image coordinate system, and coordinates of any point on an image plane q may be represented by image coordinates (x, y). A three-dimensional coordinate system O-XYZ is a spatial coordinate system, and any plane in the spatial coordinate system may be referred to as a spatial plane. A spatial plane Q is any plane in the spatial coordinate system (that is, the spatial plane Q is any plane in O-XYZ). Coordinates of any point on the spatial plane Q may be represented by spatial coordinates $(X, Y, Z)$. The following transformation relationship exists between the image plane q and the spatial plane Q: $q = sHQ$.

Herein, q represents image coordinates of a point on the image plane, Q represents spatial coordinates of a

$$M = \begin{bmatrix} f_x & 0 & c_x \\ 0 & f_y & c_y \\ 0 & 0 & 1 \end{bmatrix}.$$

point on the spatial plane, s represents a scale factor, and a homography matrix is $H = MW$.
M represents an intrinsic parameter matrix of the camera, $f_x$ represents a product of a physical focal length of a lens in the camera and a size of each imaged unit in the x direction, $f_y$ represents a product of the physical focal length of the lens in the camera and the size of each imaged unit in the y direction, $c_x$ represents an offset of a projection coordinate center relative to an optical axis in the x direction, and $c_y$ represents an offset of the projection coordinate center relative to the optical axis in the y direction. The size of each imaged unit may be one pixel in the image shot by the camera.

$W = [R, t]$, where W is an extrinsic parameter matrix of the camera, R is a 3 x 3 orthogonal identity matrix, which is also referred to as a rotation matrix, and t is a three-dimensional translation vector.

In the embodiments of this application, the foregoing transformation relationship is mainly applied to the following two example cases.

Case 1: If the foregoing transformation relationship exists between the image plane q and the spatial plane Q, and image coordinates of a point on q, the scale factor, and the homography matrix H are known, spatial coordinates of the point on Q may be calculated based on the foregoing transformation relationship between the image plane and the spatial plane.

For example, in FIG. 1, the image coordinates of the point on the plane q are $(x_1, y_1)$. If the intrinsic parameter matrix of the camera is M, the extrinsic parameter matrix of the camera is W, and the scale factor is s, an equation in which $X_1$, $Y_1$, and $Z_1$ are unknown numbers may be obtained based on the transformation relationship between the

$$\begin{pmatrix} x_1 \\ y_1 \\ 1 \end{pmatrix} = sH \begin{pmatrix} X_1 \\ Y_1 \\ Z_1 \\ 1 \end{pmatrix}$$

image plane and the spatial plane: $H = MW$. The equation is solved to obtain the coordinates $(X_1, Y_1, Z_1)$ of the point on the spatial plane Q.

Case 2: If the foregoing transformation relationship exists between the image plane q and the spatial plane Q, and image coordinates of a plurality of points on q, spatial coordinates of the plurality of points on the spatial plane Q, and the intrinsic parameter matrix of the camera are known, a product of the scale factor and the extrinsic parameter matrix of the camera may be calculated based on the transformation relationship between the image plane and the spatial plane.

For example, in FIG. 1, $Q_1$ is a rectangle on the spatial plane Q, and a rectangle $q_1$ is a rectangle mapped to the rectangle $Q_1$ on the image plane q based on the foregoing transformation relationship between the image plane and the spatial plane. If image coordinates of four corners of the rectangle $q_1$ are respectively $(x_1, y_1)$, $(x_2, y_2)$, $(x_3, y_3)$, and $(x_4, y_4)$, spatial coordinates of four corners of the rectangle $Q_1$ are respectively $(X_1, Y_1, Z_1)$, $(X_2, Y_2, Z_2)$, $(X_3, Y_3, Z_3)$, and $(X_4, Y_4, Z_4)$, and the intrinsic parameter matrix of the camera is M, an overdetermined equation in which sH is an unknown number may be obtained based on the transformation relationship between the image plane and the spatial

$$\begin{pmatrix} x_1 & x_2 & x_3 & x_4 \\ y_1 & y_2 & y_3 & y_4 \\ 1 & 1 & 1 & 1 \end{pmatrix} = sH \begin{pmatrix} X_1 & X_2 & X_3 & X_4 \\ Y_1 & Y_2 & Y_3 & Y_4 \\ Z_1 & Z_2 & Z_3 & Z_4 \\ 1 & 1 & 1 & 1 \end{pmatrix}.$$

The overdetermined equation is solved by using a constrained least square method or a random sample consensus method, to obtain sH. Then, sH is divided by the intrinsic parameter matrix M of the camera, to obtain the product of the scale factor and the extrinsic parameter matrix of the camera.

The following describes in detail implementations of the embodiments of this application based on the transformation relationship between the image coordinate system and the spatial coordinate system with reference to the accompanying drawings.

A method provided in the embodiments of this application may be applied to any interaction system in which a finger direction needs to be recognized. For example, the interaction system may be an interaction system in a smart cockpit, or may be another interaction system such as a smart home system in which a finger direction needs to be recognized. The smart cockpit may be a smart cockpit of a vehicle, a smart cockpit of a train, a smart cockpit of an aircraft, or the like. The method provided in the embodiments of this application is described by using the smart cockpit of the vehicle as an example. For a case in which the method provided in the embodiments of this application is applied to another type of interaction system, refer to the descriptions in the embodiments of this application. Details are not described. The following describes the method provided in the embodiments of this application only by using an interaction system shown in FIG. 2 as an example.

FIG. 2 is a schematic architectural diagram of an interaction system according to an embodiment of this application. The interaction system shown in FIG. 2 includes a head unit control apparatus 201 and a visual perception apparatus 202. The head unit control apparatus 201 and the visual perception apparatus 202 are connected in a wired or wireless manner (for example, Bluetooth communication).

The head unit control apparatus 201 may control or adjust a vehicle-mounted device. For example, the head unit control apparatus 201 may adjust an air outlet of an in-vehicle air conditioner For another example, the head unit control apparatus 201 may control an augmented reality (augmented reality, AR) head-up display (head-up display, HUD) to display corresponding information.

The visual perception apparatus 202 may be a conventional camera or a smart camera. The conventional camera is a camera with a camera capability. The smart camera provides an image processing function and an artificial intelligence algorithm function in addition to the camera capability. The visual perception apparatus 202 may be deployed above a rearview mirror, or at another location in the smart cockpit of the vehicle. This is not limited.

Optionally, the visual perception apparatus 202 is a monocular camera, a binocular camera, or a depth camera. It may be understood that the visual perception apparatus 202 may alternatively be a tri-lens camera or a multi-lens camera. This is not limited.

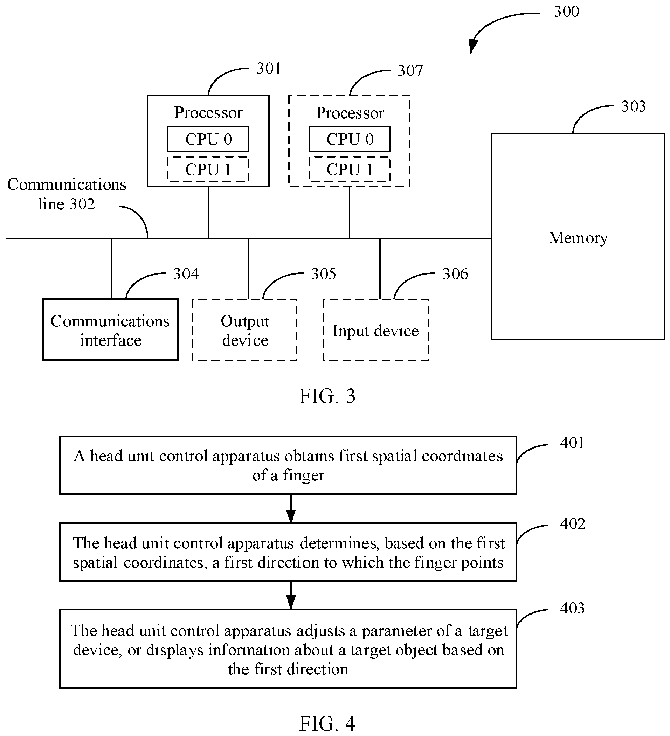

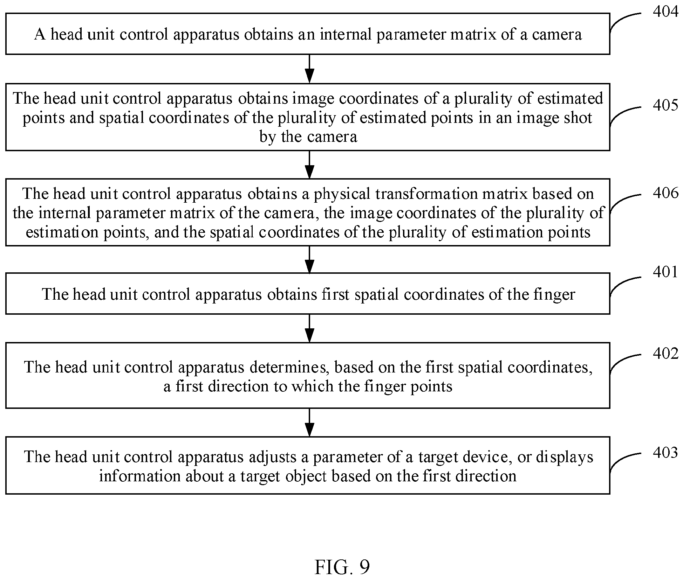

In some embodiments, the visual perception apparatus 202 is the conventional camera, and the head unit control apparatus 201 may obtain first spatial coordinates of a finger; determine, based on the first spatial coordinates, a first direction to which the finger points; and adjust a parameter of a target device, or display information about a target object based on the first direction. For details, refer to descriptions in the following method shown in FIG. 4 or FIG. 9.

Optionally, in this case, information about a three-dimensional drawing of a smart cockpit of a vehicle or information about a three-dimensional model of a smart cockpit of a vehicle is stored or pre-configured in the head unit control apparatus 201.

It may be understood that, before using coordinate system information corresponding to the three-dimensional drawing of the smart cockpit of the vehicle or coordinate system information corresponding to the three-dimensional model of the smart cockpit of the vehicle, the head unit control apparatus 201 may download, from a network, the coordinate system information corresponding to the three-dimensional drawing of the smart cockpit of the vehicle, or the coordinate system information corresponding to the three-dimensional model of the smart cockpit of the vehicle.

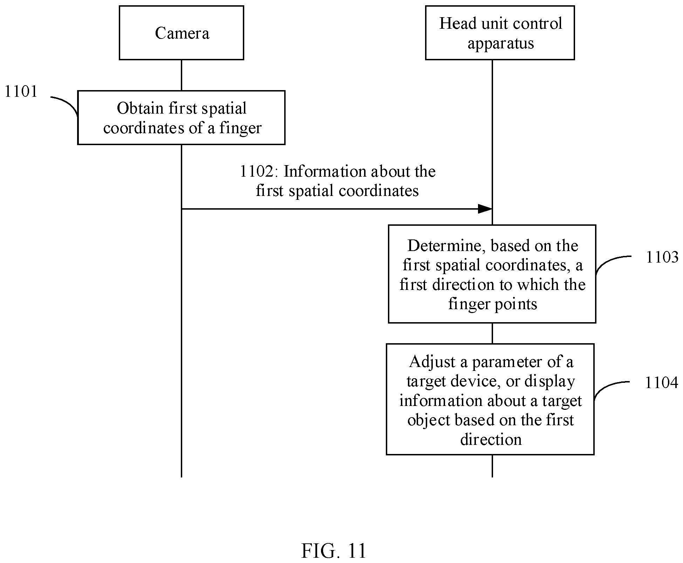

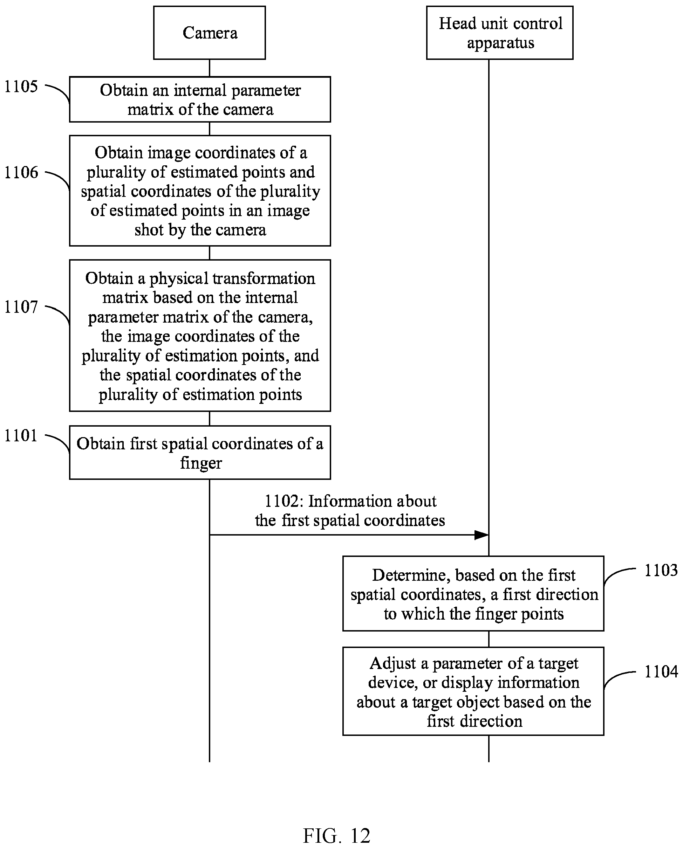

In some embodiments, the visual perception apparatus 202 is the smart camera, and the camera may obtain first spatial coordinates of a finger, and send information about the first spatial coordinates to the head unit control apparatus 201. The head unit control apparatus 201 receives the information about the first spatial coordinate; may determine, based on the information about the first spatial coordinate, a first direction to which the finger points; and adjust a parameter of a target device, or display information about a target object based on the first direction. For details, refer to descriptions in the following method shown in FIG. 11 or FIG. 12.

Optionally, in this case, information about a three-dimensional drawing of a smart cockpit of a vehicle or information about a three-dimensional model of a smart cockpit of a vehicle is stored or pre-configured in the head unit control apparatus 201 and the visual perception apparatus 202.

It may be understood that, before using coordinate system information corresponding to the three-dimensional drawing of the smart cockpit of the vehicle or coordinate system information corresponding to the three-dimensional model of the smart cockpit of the vehicle, the head unit control apparatus 201 and the visual perception apparatus 202 may download, from a network, the coordinate system information corresponding to the three-dimensional drawing of the smart cockpit of the vehicle, or the coordinate system information corresponding to the three-dimensional model of the smart cockpit of the vehicle.

It should be noted that the interaction system shown in FIG. 2 is merely used as an example and is not intended to limit technical solutions of this application. A person skilled in the art should understand that, in a specific implementation process, the interaction system may further include another device.

Optionally, the apparatuses in FIG. 2 in this embodiment of this application, for example, the head unit control apparatus 201 or the visual perception apparatus 202, may be one function module in an apparatus. It may be understood that the functional module may be an element in a hardware device, for example, a communications chip or a communications component in a terminal device or a network device, or may be a software functional module running on hardware, or a virtualized function instantiated on a platform (for example, a cloud platform).

For example, the apparatuses in FIG. 2 may be implemented by using an electronic device 300 in FIG. 3. FIG. 3 is a schematic diagram of a hardware structure of an electronic device applicable to an embodiment of this application. The electronic device 300 may include at least one processor 301, a communications line 302, a memory 303, and at least one communications interface 304.

The processor 301 may be a general-purpose central processing unit (central processing unit, CPU), a microprocessor, an application-specific integrated circuit (application-specific integrated circuit, ASIC), or one or more integrated circuits configured to control program execution of the solutions in this application.

The communications line 302 may include a path for transferring information between the foregoing components, such as a bus.

The communications interface 304 uses any apparatus of a transceiver type, to communicate with another device or a communications network, for example, an Ethernet interface, a radio access network (radio access network, RAN) interface, or a wireless local area network (wireless local area networks, WLAN) interface.

The memory 303 may be, but not limited to, a read-only memory (read-only memory, ROM) or another type of static storage device capable of storing static information and an instruction, or a random access memory (random access memory, RAM) or another type of dynamic storage device capable of storing information and an instruction, or may be an electrically erasable programmable read-only memory (electrically erasable programmable read-only memory, EEPROM), a compact disc read-only memory (compact disc read-only memory, CD-ROM) or other compact disc storage, optical disc storage (including a compressed optical disc, a laser disc, an optical disc, a digital universal optical disc, a blue-ray optical disc, and the like), a magnetic disk storage medium or another magnetic storage device, or any other medium capable of carrying or storing expected program code in a form of instructions or data structures and capable of being accessed by a computer. The memory may exist independently, and is connected to the processor by using the communications line 302. The memory may alternatively be integrated with the processor. The memory provided in this embodiment of this application may usually be non-volatile. The memory 303 is configured to store computer-executable instructions for executing the solutions of this application, and the processor 301 controls the execution. The processor 301 is configured to execute the computer-executable instructions stored in the memory 303, to implement the method provided in the embodiments of this application.

Optionally, the computer-executable instructions in the embodiments of this application may also be referred to as application program code. This is not specifically limited in the embodiments of this application.

During specific implementation, in an embodiment, the processor 301 may include one or more CPUs, for example, a CPU 0 and a CPU 1 in FIG. 3.

In specific implementation, in an embodiment, the electronic device 300 may include a plurality of processors, for example, the processor 301 and a processor 307 in FIG. 3. Each of the processors may be a single-core (single-CPU) processor, or may be a multi-core (multi-CPU) processor. The processor herein may be one or more devices, circuits, and/or processing cores configured to process data (for example, a computer program instruction).

In specific implementation, in an embodiment, the electronic device 300 may further include an output device 305 and an input device 306. The output device 305 communicates with the processor 301, and may display information in a plurality of manners. For example, the output device 305 may be a liquid crystal display (liquid crystal display, LCD), a light emitting diode (light emitting diode, LED) display device, a cathode ray tube (cathode ray tube, CRT) display device, or a projector. The input device 306 communicates with the processor 301, and may receive an input of a user in a plurality of manners. For example, the input device 306 may be a mouse, a keyboard, a touchscreen device, or a sensing device.

It should be noted that if a visual perception apparatus is a smart camera, and the visual perception apparatus is implemented by using the electronic device 300, a CPU in the electronic device 300 may be replaced with a graphics processing unit (graphics processing unit, GPU).

The following specifically describes the interaction method in the embodiments of this application with reference to FIG. 1, FIG. 2, and FIG. 3. An apparatus in the following embodiments may have the components shown in FIG. 3.

It should be noted that, in the following embodiments of this application, the word "example" "optional" or "for example" is used to represent giving an example, an illustration, or a description. Any following embodiment or design scheme described as an "example" "optional" or "for example" in the embodiments of this application should not be explained as being more preferred or having more advantages than another embodiment or design scheme. Exactly, use of the word " example" "optional" or "for example" or the like is intended to present a relative concept in a specific manner

It should be noted that, in descriptions of this application, a word such as "first" or "second" is merely used for distinction and description, and shall not be understood as an indication or implication of relative importance or an indication or implication of an order. For directions with different numbers, such as "first direction" in this application, the numbers are merely used for contextual convenience, and different sequence numbers do not have specific technical meanings. For example, first direction or second direction may be understood as one or any one of a series of directions.

It may be understood that a same step or a step or a message having a same function in the embodiments of this application may be mutually referenced in different embodiments.

It may be understood that, in the embodiments of this application, the visual perception apparatus or the head unit control apparatus may perform some or all of steps in the embodiments of this application. These steps are merely examples. In the embodiments of this application, other steps or variations of various steps may be alternatively performed. In addition, the steps may be performed in a sequence different from a sequence presented in the embodiments of this application, and it is possible that not all the steps in the embodiments of this application need to be performed.

In this embodiment of this application, a specific structure of an execution body of an interaction method is not particularly limited in this embodiment of this application, provided that communication may be performed by running a program that records code of the interaction method in the embodiments of this application. For example, an interaction method provided in this embodiment of this application may be executed by a visual perception apparatus, or a component applied to the visual perception apparatus, for example, a chip or a processor. This is not limited in this application. Alternatively, the interaction method provided in this embodiment of this application may be executed by a head unit control apparatus, or a component applied to a head unit control apparatus, for example, a chip or a processor. This is not limited in this application. In the following embodiments, an example in which an interaction method is executed by a visual perception apparatus and a head unit control apparatus is used for description.

First, an example in which the visual perception apparatus is a conventional camera is used to describe the interaction method provided in this embodiment of this application.

FIG. 4 shows an interaction method according to an embodiment of this application. The interaction method includes step 401 to step 403.

Step 401: A head unit control apparatus obtains first spatial coordinates of a finger.

The head unit control apparatus may be the head unit control apparatus 201 in FIG. 2. The first spatial coordinates are coordinates in a three-dimensional coordinate system. For example, the first spatial coordinates are coordinates in a coordinate system corresponding to a three-dimensional drawing (for example, a CAD drawing) of a smart cockpit of a vehicle, or coordinates in a coordinate system corresponding to a three-dimensional model of a smart cockpit of a vehicle. The vehicle is a vehicle on which the head unit control apparatus is located. The first spatial coordinates include spatial coordinates of at least two points on the finger.

Optionally, to avoid a misoperation, the head unit control apparatus obtains, within a preset time period, the first spatial coordinates of the finger when the head unit control apparatus detects that a direction to which the finger points is within a first range.

The first range is a range in which an included angle with an initial direction of the finger is less than or equal to a first threshold. The initial direction of the finger is a finger direction detected at an initial moment of the preset time period. The first threshold may be set before delivery. For example, a proper first threshold is set based on big data statistics. Alternatively, the first threshold may be set by a user after delivery.

For example, the preset time period is 2 seconds and the first threshold is 10°. If at a moment within 2 seconds, the included angle between the initial direction and the direction to which the finger points and that is detected by the head unit control apparatus is 30°, the head unit control apparatus does not trigger an operation of obtaining the first spatial coordinates of the finger. If, at any moment within 2 seconds, the included angle between the initial direction and the direction to which the finger points and that is detected by the head unit control apparatus is less than or equal to 10°, the head unit control apparatus obtains the first spatial coordinates of the finger.

Optionally, the head unit control apparatus obtains the first spatial coordinates in the following manner: The head unit control apparatus obtains image coordinates of the finger in an image shot by a camera; and obtains the first spatial coordinates based on the image coordinates of the finger, an intrinsic parameter matrix of the camera, and a physical transformation matrix.

The image coordinates of the finger are coordinates in a two-dimensional coordinate system. For example, the image coordinates of the finger are coordinates of the finger in a coordinate system of the camera. The coordinate system of the camera may alternatively be referred to as a coordinate system established on the image shot by the camera. The camera may be the visual perception apparatus 202 in FIG. 2. The intrinsic parameter matrix and the physical transformation matrix of the camera may be used to indicate a transformation relationship between the two-dimensional coordinate system and the three-dimensional coordinate system.

First, an example process in which the head unit control apparatus obtains the image coordinates of the finger in the image shot by the camera is described.

In a possible implementation, that the head unit control apparatus obtains the image coordinates of the finger in the image shot by the camera includes: The head unit control apparatus receives the image shot by the camera from the camera; and the head unit control apparatus obtains, based on the image shot by the camera, the image coordinates of the finger in the image shot by the camera.

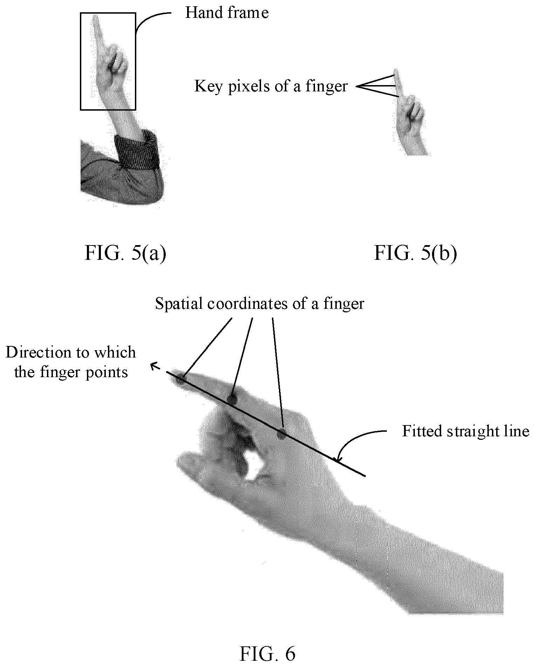

For example, the image shot by the camera may be shown in FIG. 5(a). The image coordinates of the finger are coordinates of key pixels of the finger in the image shot by the camera. The key pixels of the finger may include a plurality of pixels that can reflect a direction to which the finger points. For example, the key pixels of the finger include at least two pixels on finger joints. For example, the key pixels of the finger may be shown in FIG. 5(b). Further, the head unit control apparatus determines the key pixels of the finger in the image shot by the camera, and obtains the image coordinates of the finger. For example, the head unit control apparatus may determine, by using a method such as deep learning, the key pixels of the finger in the image shot by the camera.

Further, to reduce a calculation amount of the head unit control apparatus, the head unit control apparatus may first crop a hand in the image shot by the camera, and then obtain the image coordinates of the finger based on the cropped hand. For example, the head unit control apparatus determines a hand frame in the image shot by the camera, and crops the hand frame. The head unit control apparatus determines the key pixels of the finger in the hand frame, and obtains the image coordinates of the finger.

There are a wrist and a hand in the hand frame. For example, the hand frame determined by the head unit control apparatus may be shown in FIG. 5(a), and the hand frame cropped by the head unit control apparatus may be shown in FIG. 5(b).

For example, the head unit control apparatus may determine, by using a target detector, for example, an SSD (single shot multibox detector) or a YOLO (you only look once) version 3 (v3), a position of the hand frame in the image shot by the camera. It may be understood that the SSD and YOLO v3 are merely examples, and the head unit control apparatus may further determine the position of the hand frame by using another target detector. This is not limited. For example, the head unit control apparatus may determine the key pixels of the finger based on an Openpose model. It may be understood that, in actual application, the head unit control apparatus may further determine the key pixels of the finger by using another model or software. This is not limited.

In a possible implementation, the head unit control apparatus obtains, in the following cases, the image coordinates of the finger in the image shot by the camera.

Case 1: The head unit control apparatus receives the image shot by the camera from the camera, and obtains the image coordinates of the finger in the image shot by the camera. In this case, the image shot by the camera has a hand. In other words, when detecting that the hand exists in the shot image, the camera sends the shot image to the head unit control apparatus. The head unit control apparatus receives the shot image, and obtains the image coordinates of the finger in the shot image.

Case 2: The head unit control apparatus receives the image shot by the camera from the camera, and when detecting that a hand exists in the image shot by the camera, obtains the image coordinates of the finger in the image shot by the camera. In this case, the camera does not necessarily have the hand in the image. In other words, the camera sends the shot image to the head unit control apparatus after shotting the image.

The following describes a specific process of obtaining the first spatial coordinates based on the image coordinates of the finger, the intrinsic parameter matrix of the camera, and the physical transformation matrix.

The intrinsic parameter matrix of the camera may reflect an attribute of the camera, for example, an intrinsic parameter of the camera. The intrinsic parameter of the camera may include a field of view (field of view, FOV), a focal length, a distortion amount, and the like of the camera. For example, the intrinsic parameter matrix of the camera may be obtained by using a checkerboard grid method of Zhang Zhengyou.

The physical transformation matrix is sW. In other words, the physical transformation matrix is a product of a scale factor and an extrinsic parameter matrix of the camera. The extrinsic parameter matrix of the camera may reflect an external attribute of the camera, for example, extrinsic parameters of the camera. The external parameters of the camera include but are not limited to a position of the camera, a height of the camera, a pitch angle of the camera, and the like.

In a possible implementation, the physical transformation matrix may be obtained by using the following method: The head unit control apparatus obtains an intrinsic parameter matrix of a camera; the head unit control apparatus obtains image coordinates of a plurality of estimation points and spatial coordinates of the plurality of estimation points in an image shot by the camera; and the head unit control apparatus obtains the physical transformation matrix based on the intrinsic parameter matrix of the camera, the image coordinates of the plurality of estimation points, and the spatial coordinates of the plurality of estimation points. Specifically, refer to the following method shown in FIG. 9. Details are not described again.

It should be noted that a process in which the head unit control apparatus obtains the physical transformation matrix is a preprocessing process. In other words, the head unit control apparatus obtains the physical transformation matrix before performing the method shown in FIG. 4. It may be understood that if the external parameter of the camera does not change, the head unit control apparatus does not need to obtain the physical transformation matrix again.

It may be understood that the physical transformation matrix may alternatively be preset in the head unit control apparatus. In other words, when the vehicle is delivered from a factory, the physical transformation matrix may be preset in the head unit control apparatus. Subsequently, if the extrinsic parameter of the camera changes, the head unit control apparatus may obtain the physical transformation matrix again by using the method shown in FIG. 9.

10

In a possible implementation, that the head unit control apparatus obtains the first spatial coordinates based on the image coordinates of the finger, the intrinsic parameter matrix of the camera, and the physical transformation matrix includes: The head unit control apparatus performs coordinate transformation on the image coordinates of the finger, the physical transformation matrix, and the intrinsic parameter matrix of the camera, to obtain the first spatial coordinates.

The first spatial coordinates include spatial coordinates of at least two points on the finger. The image coordinates of the finger are in a one-to-one correspondence with the first spatial coordinates. Coordinates of any key pixel in the image coordinates of the finger and spatial coordinates corresponding to the coordinates of the key pixel meet a formula:

$$\begin{pmatrix} X \\ Y \\ Z \\ 1 \end{pmatrix} = \begin{pmatrix} x \\ y \\ 1 \end{pmatrix} / sMW$$

. (x, y) is the coordinates of any key pixel in the image coordinates of the finger, (X, Y, Z) is the spatial coordinates corresponding to the coordinates of the key pixel, sW is the physical transformation matrix, and M is the intrinsic parameter matrix of the camera.

For example, the image coordinates of the finger include $(x_1, y_1)$ and $(x_2, y_2)$, the physical transformation matrix is sW, and the intrinsic parameter matrix of the camera is M. The first spatial coordinates include $(X_1, Y_1, Z_1)$ and $(X_2,$

$$\begin{pmatrix} X_1 \\ Y_1 \\ Z_1 \\ 1 \end{pmatrix} = \begin{pmatrix} x_1 \\ y_1 \\ 1 \end{pmatrix} / sMW \qquad \begin{pmatrix} X_2 \\ Y_2 \\ Z_2 \\ 1 \end{pmatrix} = \begin{pmatrix} x_2 \\ y_2 \\ 1 \end{pmatrix} / sMW$$

$Y_2, Z_2$). $(X_1, Y_1, Z_1)$ satisfies . $(X_2, Y_2, Z_2)$ satisfies .

Step 402: The head unit control apparatus determines, based on the first spatial coordinates, a first direction to which the finger points.

Optionally, that the head unit control apparatus determines, based on the first spatial coordinates, a first direction to which the finger points includes: The head unit control apparatus fits a straight line based on the spatial coordinates of the at least two points included in the first spatial coordinates, where a direction of the straight line is the first direction. The direction of the straight line is pointed from a point, in the at least two points, close to the wrist to a point far from the wrist.

For example, the straight line fitted by the head unit control apparatus based on the spatial coordinates of the at least two points included in the first spatial coordinates may be shown in FIG. 6. The first spatial coordinates in FIG. 6 include spatial coordinates of three points. The head unit control apparatus fits a straight line based on the spatial coordinates of the three points, and a direction to which the finger points is pointed from a point, in the three points, close to a wrist to a point far from the wrist.

It may be understood that, a larger quantity of points included in the first spatial coordinate indicates that the straight line fitted by the head unit control apparatus is closer to the gesture of the finger, and the direction to which the finger points and that is determined by the head unit control apparatus is more accurate. In addition, because the first spatial coordinates are in a one-to-one correspondence with the image coordinates of the finger, the more coordinates of the key pixel points of the finger in the image coordinates of the finger that is obtained by the head unit control apparatus in step 401 indicates the more accurate direction to which the finger points.

Step 403: The head unit control apparatus adjusts a parameter of a target device or displays information about a target object based on the first direction.

First, an example process in which the head unit control apparatus adjusts the parameter of the target device based on the first direction is described.

Optionally, the target device may be determined in any one of the following manners: The head unit control apparatus determines based on a second direction to which the finger points; the user selects the target device by pressing a button; or the user selects the target device in a voice interaction manner.

Further, the second direction to which the finger points may be obtained based on second spatial coordinates of the finger that are used to determine the target device. For example, the head unit control apparatus obtains the second spatial coordinates of the finger; the head unit control apparatus determines, based on the second spatial coordinates, the second direction to which the finger points; and the head unit control apparatus determines a device at the second direction as the target device. The second spatial coordinates are coordinates in the three-dimensional coordinate system.

It may be understood that, for a process in which the head unit control apparatus obtains the second spatial coordinates of the finger, and determines, based on the second spatial coordinates, the second direction to which the finger points, refer to the process in which the head unit control apparatus obtains the first direction in step 401 and step 402. Details are not described again.

Further, the head unit control apparatus may determine a first device at the second direction as the target device. For example, the head unit control apparatus determines that the first device at the second direction is a window, and uses the window as the target device.

In a possible implementation, the adjusting a parameter of a target device based on the first direction includes: adjusting a parameter of a window in the vehicle based on the first direction; adjusting a parameter of a sunroof in the vehicle based on the first direction; or adjusting a parameter of an air conditioner in the vehicle based on the first direction.

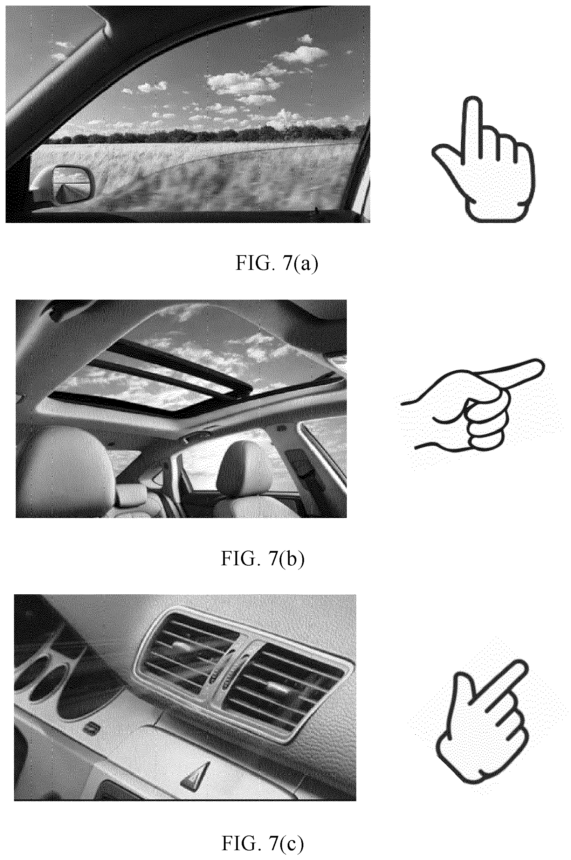

For example, as shown in FIG. 7(a), FIG. 7(b) and FIG. 7(c), a finger direction shown in FIG. 7(a) may adjust the parameter of the window, for example, reduce a parameter for controlling an on/off degree of the window. A finger direction shown in FIG. 7(b) may adjust the parameter of the sunroof in the vehicle, for example, reduce a parameter for controlling an on/off degree of the sunroof. A finger direction shown in FIG. 7(c) may adjust the parameter of the air conditioner, for example, increase a parameter for controlling an air outlet direction of the air conditioner.

The following describes a specific process in which the head unit control apparatus displays the information about the target object based on the first direction.

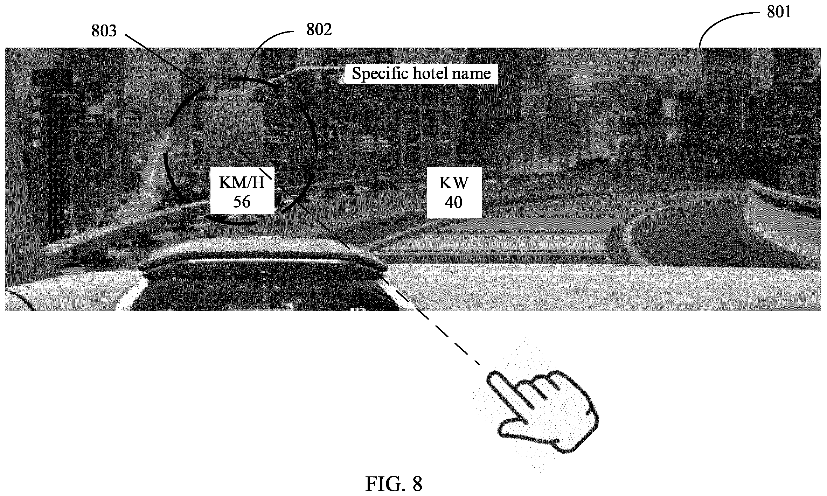

The target object is an object in an interaction area, or the target object is a first object at the first direction. The interaction area is an area covered at the first direction. For example, the interaction area is an area whose included angle with the first direction is less than or equal to a second threshold. For example, the interaction area may be shown in 803 in FIG. 8.

Optionally, the target object is all or some objects in the interaction area. When the target object is some objects in the interaction area, the target object is an object whose included angle with the first direction is less than or equal to a third threshold in the interaction area. The second threshold is greater than the third threshold.

The second threshold or the third threshold may be set before delivery. For example, the proper second threshold or the third threshold is set based on big data statistics. Alternatively, the second threshold or the third threshold may be set by the user after delivery.

It may be understood that the second threshold may be the same as or different from the first threshold. The third threshold may be the same as or different from the first threshold.

In a possible implementation, the target object is an object in the interaction area, and the head unit control apparatus controls, based on the first direction, an AR-HUD to display related information about the object on a display interface (for example, a windshield of the vehicle).

For example, as shown in FIG. 8, an area 801 is an image displayed by the AR-HUD on the windshield. The head unit control apparatus controls, based on the first direction, the AR-HUD to display related information of the target object 802, such as a specific hotel name, on the windshield.

In another possible implementation, the target object is the first object at the first direction, and the head unit control apparatus controls, based on the first direction, the AR-HUD to display the information about the target object on the display interface (for example, a windshield of the vehicle). For example, if the first object at the first direction is the air conditioner, the head unit control apparatus controls the AR-HUD to display, on the windshield, an in-vehicle temperature, an in-vehicle humidity, an air exhaust mode, and the like.

Based on the method shown in FIG. 4, the head unit control apparatus may obtain the first spatial coordinates, determine, based on the first spatial coordinates, the first direction to which the finger points, and adjust the parameter of the target device or display the information about the target object based on the first direction. In the smart cockpit of the vehicle, the finger may point to any direction, and different directions may correspond to different functions of the smart cockpit of the vehicle. Therefore, different functions may be implemented based on the direction pointed to by the finger. In addition, compared with that in which a device in the smart cockpit of the vehicle is adjusted based on a gesture, the method provided in this embodiment of this application may further display the information about the target object based on the direction pointed to by the finger. In this way, a human-machine interaction manner is increased.

Further optionally, as shown in FIG. 9, in the method shown in FIG. 4, the physical transformation matrix may be obtained by using step 404 to step 406.

Step 404: A head unit control apparatus obtains an intrinsic parameter matrix of a camera.

In a possible implementation, the head unit control apparatus may obtain the intrinsic parameter matrix of the camera by using the checkerboard grid method of Zhang Zhengyou.

Step 405: The head unit control apparatus obtains image coordinates of a plurality of estimation points and spatial coordinates of the plurality of estimation points in an image shot by the camera.

The image coordinates of the plurality of estimation points are coordinates in the two-dimensional coordinate system. For example, the image coordinates of the plurality of estimation points are coordinates of the plurality of estimation points in the image shot by the camera. The spatial coordinates of the plurality of estimation points are coordinates in the three-dimensional coordinate system. For example, the spatial coordinates of the plurality of estimation points are coordinates of the plurality of estimation points in the coordinate system corresponding to the three-dimensional drawing of the smart cockpit of the vehicle, or coordinates in the coordinate system corresponding to the three-dimensional model of the smart cockpit of the vehicle. In this case, the head unit control apparatus stores information about the three-dimensional drawing or information about the three-dimensional model.

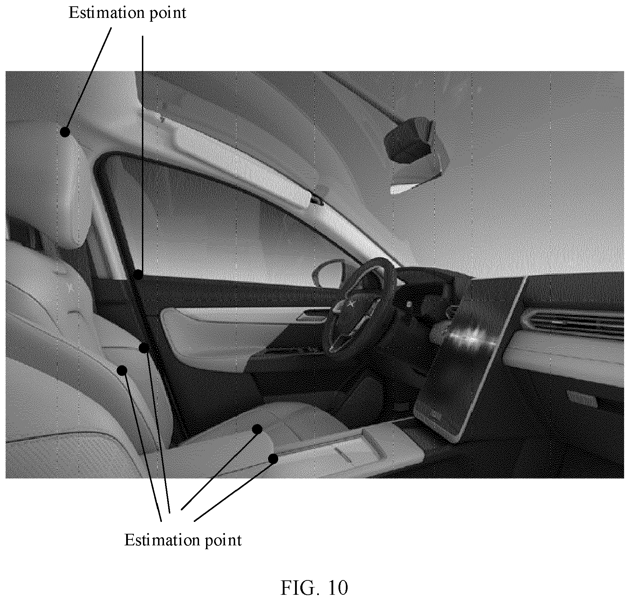

The plurality of estimation points may be easily recognized points in the smart cockpit of the vehicle, for example, corner points of components in the smart cockpit of the vehicle. In this way, an error in calculating the physical transformation matrix can be reduced. For example, the plurality of estimation points may be shown in FIG. 10.

In a possible implementation, the head unit control apparatus determines the plurality of estimation points; the head unit control apparatus obtains the image shot by the camera, and obtains the image coordinates of the plurality of estimation points based on the image shot by the camera; and the head unit control apparatus obtains the spatial coordinates of the plurality of estimation points based on the three-dimensional drawing of the vehicle.

It should be noted that the quantity of estimation points is not limited in this embodiment of this application. However, a person skilled in the art should understand that a larger quantity of estimation points indicates a more accurate physical transformation matrix obtained through calculation.

Step 406: The head unit control apparatus obtains the physical transformation matrix based on the intrinsic parameter matrix of the camera, the image coordinates of the plurality of estimation points, and the spatial coordinates of the plurality of estimation points.

Optionally, that the head unit control apparatus obtains the physical transformation matrix based on the intrinsic parameter matrix of the camera, the image coordinates of the plurality of estimation points, and the spatial coordinates of the plurality of estimation points includes: The head unit control apparatus obtains, based on the image coordinates of the plurality of estimation points, the spatial coordinates of the plurality of estimation points, and the intrinsic parameter matrix of the camera, an equation set whose physical transformation matrix is an unknown number, solves the equation set, and obtains the physical transformation matrix corresponding to the extrinsic parameter of the camera. For example, a quantity of the plurality of estimation points is 8, and spatial coordinates of the eight estimation points are respectively $(X_1, Y_1, Z_1)$, $(X_2, Y_2, Z_2)$, $(X_3, Y_3, Z_3)$, $(X_4, Y_4, Z_4)$, $(X_5, Y_5, Z_5)$, $(X_6, Y_6, Z_6)$, $(X_7, Y_7, Z_7)$, and $(X_8, Y_8, Z_8)$. An example in which image coordinates of the eight estimation points are respectively $(x_1, y_1)$, $(x_2, y_2)$, $(x_3, y_3)$, $(x_4, y_4)$, $(x_5, y_5)$, $(x_6, y_6)$, $(x_7, y_7)$, and $(x_8, y_8)$ is used. Based on the spatial coordinates of the plurality of estimation points, the image coordinates of the plurality of estimation points, and the intrinsic parameter matrix (M in the following equation set) of the camera, the following equation set whose physical transformation matrix is an unknown number may be obtained:

$$\begin{bmatrix} x_1 & x_2 & x_3 & x_4 & x_5 & x_6 & x_7 & x_8 \\ y_1 & y_2 & y_3 & y_4 & y_5 & y_6 & y_7 & y_8 \\ 1 & 1 & 1 & 1 & 1 & 1 & 1 & 1 \end{bmatrix} = sWM \begin{bmatrix} X_1 & X_2 & X_3 & X_4 & X_5 & X_6 & X_7 & X_8 \\ Y_1 & Y_2 & Y_3 & Y_4 & Y_5 & Y_6 & Y_7 & Y_8 \\ Z_1 & Z_2 & Z_3 & Z_4 & Z_5 & Z_6 & Z_7 & Z_8 \\ 1 & 1 & 1 & 1 & 1 & 1 & 1 & 1 \end{bmatrix}.$$

The foregoing equation may be solved by using a constrained least square method or a random sample consensus method, to obtain sW, namely, the physical transformation matrix.

Based on the method shown in FIG. 9, a head unit control apparatus may obtain an intrinsic parameter matrix of a camera, image coordinates of a plurality of estimation points, and spatial coordinates of the plurality of estimation points, and obtain the physical transformation matrix based on the intrinsic parameter matrix, the image coordinates of the plurality of estimation points, and the spatial coordinates of the plurality of estimation points. In this way, the head unit control apparatus may determine a transformation relationship between a two-dimensional coordinate system and a three-dimensional coordinate system, and may subsequently convert, based on the transformation relationship, image coordinates of a finger in the image shot by the camera into spatial coordinates of the finger, so as to determine a direction to which the finger points.

The foregoing describes the interaction method provided in this embodiment of this application by using an example in which the visual perception apparatus is the conventional camera. In addition, the visual perception apparatus may alternatively be a smart camera. An example in which the visual perception apparatus is the smart camera is used below to describe an interaction method provided in an embodiment of this application.

FIG. 11 is still another interaction method according to an embodiment of this application. The interaction method includes step 1101 to step 1104.

Step 1101: A camera obtains first spatial coordinates of a finger.

The camera may be the visual perception apparatus 202 in FIG. 2. For a specific process of step 1101, refer to the corresponding descriptions in step 401. Details are not described again.

Step 1102: The camera sends information about the first spatial coordinates to a head unit control apparatus.

The head unit control apparatus may be the head unit control apparatus 201 in FIG. 2. The information about the first spatial coordinate may be used to indicate the first spatial coordinate.

Step 1103: The head unit control apparatus receives the information from the first spatial coordinates of the camera, and determines, based on the first spatial coordinates, a first direction to which the finger points.

For a process in which the head unit control apparatus determines, based on the first spatial coordinates, the first direction to which the finger points, refer to corresponding descriptions in step 402. Details are not described again.

Step 1104: The head unit control apparatus adjusts a parameter of the target device, or displays information about a target object based on the first direction.

For description of step 1104, refer to the foregoing step 403. Details are not described again.

Based on the method shown in FIG. 11, the camera may obtain the first spatial coordinates, and send the information about the first spatial coordinates to the head unit control apparatus. The head unit control apparatus receives the information about the first spatial coordinate; may determine, based on the first spatial coordinate, the first direction to which the finger points; and adjust the parameter of the target device, or display the information about the target object based on the first direction. In a smart cockpit of a vehicle, the finger may point to any direction, and different directions may correspond to different functions of the smart cockpit of the vehicle. Therefore, different functions may be implemented based on the direction pointed to by the finger. In addition, compared with that in which a device in the smart cockpit of the vehicle is adjusted based on a gesture, the method provided in this embodiment of this application may further display the information about the target object based on the direction pointed to by the finger. In this way, a human-machine interaction manner is increased.

Further optionally, as shown in FIG. 12, in the method shown in FIG. 11, the physical transformation matrix may be obtained by using step 1105 to step 1107.

Step 1105: The camera obtains an intrinsic parameter matrix of the camera.

Step 1106: The camera obtains image coordinates of a plurality of estimation points and spatial coordinates of the plurality of estimation points in an image shot by the camera.

Step 1107: The camera obtains the physical transformation matrix based on the intrinsic parameter matrix of the camera, the image coordinates of the plurality of estimation points, and the spatial coordinates of the plurality of estimation points.

For descriptions of step 1105 to step 1107, refer to descriptions corresponding to step 404 to step 406. Details are not described again.

Based on the method shown in FIG. 12, the camera may obtain the intrinsic parameter matrix of the camera, the image coordinates of the plurality of estimation points, and the spatial coordinates of the plurality of estimation points, and obtain the physical transformation matrix based on the intrinsic parameter matrix, the image coordinates of the plurality of estimation points, and the spatial coordinates of the plurality of estimation points. In this way, the camera may determine a transformation relationship between a two-dimensional coordinate system and a three-dimensional coordinate system, and subsequently convert, based on the transformation relationship, image coordinates of the finger in the image shot by the camera into the first spatial coordinates, so as to send the information about the first spatial coordinates to the head unit control apparatus. In this way, the head unit control apparatus determines the direction pointed to by the finger.

The foregoing mainly describes the solutions provided in the embodiments of this application from a perspective of interaction between network elements. It may be understood that, to implement the foregoing functions, the head unit control apparatus or the camera includes a corresponding hardware structure and/or software module for performing each function. A person skilled in the art should easily be aware that, in combination with units and algorithm operations of the examples described in the embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In the embodiments of this application, the head unit control apparatus or the camera may be divided into function modules according to the foregoing method examples. For example, function modules may be obtained through division based on corresponding functions, or two or more functions may be integrated into one processing module. The integrated module may be implemented in a form of hardware, or may be implemented in a form of a software functional module. It should be noted that, in this embodiment of this application, module division is an example, and is merely a logical function division. In actual implementation, another division manner may be used.

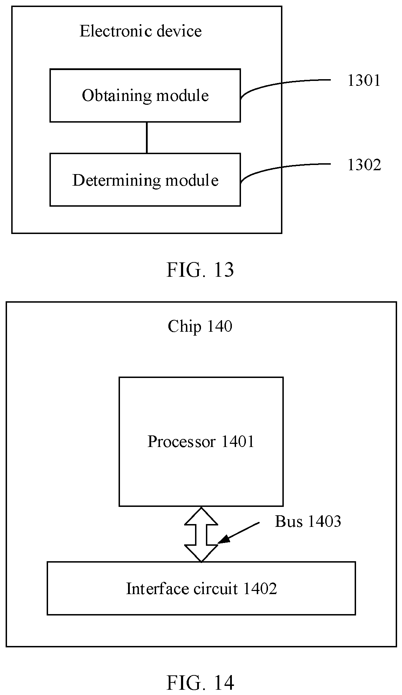

For example, when the functional modules are obtained through division in an integration manner, FIG. 13 is a schematic diagram of a structure of an electronic device. The electronic device may be a chip or a system on chip in the head unit control apparatus or the camera, and the electronic device may be configured to perform a function of the head unit control apparatus or the camera in the foregoing embodiments.

In a possible implementation, the electronic device shown in FIG. 13 includes an obtaining module 1301 and a determining module 1302.

The obtaining module 1301 is configured to obtain first spatial coordinates of a finger, where the first spatial coordinates are coordinates in a three-dimensional coordinate system.

The determining module 1302 is configured to determine, based on the first spatial coordinates, a first direction to which the finger points.

The determining module 1302 is further configured to adjust a parameter of a target device, or display information about a target object based on the first direction.

Optionally, the obtaining module 1301 is further configured to obtain second spatial coordinates of the finger, where the second spatial coordinates are coordinates in the three-dimensional coordinate system. The determining module 1302 is further configured to determine, based on the second spatial coordinates, a second direction to which the finger points. The determining module 1302 is further configured to determine a device at the second direction as the target device.

Optionally, the obtaining module 1301 is specifically configured to obtain the first spatial coordinates of the finger when detecting, within a preset time period, that a direction to which the finger points falls within a first range. The first range is a range in which an included angle with an initial direction of the finger is less than or equal to a first threshold, and the initial direction is a finger direction that is detected at an initial moment of the preset time period. Optionally, the obtaining module 1301 is specifically configured to obtain image coordinates of the finger in an image shot by a camera, where the image coordinates of the finger are coordinates in a two-dimensional coordinate system. The obtaining module 1301 is further specifically configured to obtain the first spatial coordinates based on the image coordinates of the finger, an intrinsic parameter matrix of the camera, and a physical transformation matrix, where the intrinsic parameter matrix of the camera and the physical transformation matrix are used to indicate a transformation relationship between the two-dimensional coordinate system and the three-dimensional coordinate system. Optionally, the obtaining module 1301 is further configured to obtain image coordinates of a plurality of estimation points and spatial coordinates of the plurality of estimation points in the image shot by the camera, where the image coordinates of the plurality of estimation points are coordinates in the two-dimensional coordinate system. The spatial coordinates of the plurality of estimation points are coordinates in the three-dimensional coordinate system. The determining module 1302 is further configured to obtain the physical transformation matrix based on the intrinsic parameter matrix of the camera, the image coordinates of the plurality of estimation points, and the spatial coordinates of the plurality of estimation points.

Optionally, the physical transformation matrix is preset.

Optionally, the camera is a monocular camera, a binocular camera, or a depth camera.

Optionally, the target object is an object in an interaction area. The interaction area is an area covered by the first direction.

Optionally, the two-dimensional coordinate system is a coordinate system corresponding to the camera. The three-dimensional coordinate system is a coordinate system corresponding to a three-dimensional model of the smart cockpit, or a coordinate system corresponding to a three-dimensional drawing of the smart cockpit.

Optionally, the determining module 1302 is specifically configured to adjust a parameter of a window in a vehicle based on the first direction. The determining module 1302 is specifically configured to adjust the parameter of the sunroof in the vehicle based on the first direction; or the determining module 1302 is specifically configured to adjust the parameter of the air conditioner in the vehicle based on the first direction.

All related content of the operations in the foregoing method embodiments may be cited in function description of the corresponding functional modules. Details are not described herein again.

In this embodiment, the electronic device is presented in a form of functional modules obtained through division in an integrated manner. The "module" herein may be a specific ASIC, a circuit, a processor that executes one or more software or firmware programs and a memory, an integrated logic circuit, and/or another component that can provide the foregoing functions. In a simple embodiment, a person skilled in the art may figure out that the electronic device may be in a form shown in FIG. 3.

For example, the processor 301 in FIG. 3 may invoke computer-executable instructions stored in the storage 303, so that the electronic device performs the interaction method in the foregoing method embodiment.

For example, functions/implementation processes of the obtaining module 1301 and the determining module 1302 in FIG. 13 may be implemented by the processor 301 in FIG. 3 by invoking the computer-executable instructions stored in the memory 303.

Because the electronic device provided in this embodiment may perform the foregoing interaction methods, for a technical effect that can be achieved by the electronic device, refer to the foregoing method embodiments. Details are not described herein again.

FIG. 14 is a schematic diagram of a structure of a chip according to an embodiment of this application. A chip 140 includes one or more processors 1401 and an interface circuit 1402. Optionally, the chip 140 may further include a bus 1403. Details are as follows:

The processor 1401 may be an integrated circuit chip and has a signal processing capability. In an implementation process, steps in the foregoing methods can be implemented by using a hardware integrated logical circuit in the processor 1401, or by using instructions in a form of software. The processor 1401 may be a general purpose processor, a digital communicator (DSP), an application-specific integrated circuit (ASIC), a field programmable gate array (FPGA) or another programmable logic device, a discrete gate or a transistor logic device, or a discrete hardware component. The methods and steps disclosed in the embodiments of this application may be implemented or performed. The general purpose processor may be a microprocessor, or the processor may be any conventional processor or the like.

The interface circuit 1402 is configured to send or receive data, instructions, or information. The processor 1401 may perform processing by using the data, the instructions, or other information received by the interface circuit 1402, and may send processed information by using the interface circuit 1402.

Optionally, the chip 140 further includes a memory. The memory may include a read-only memory and a random access memory, and provide operation instructions and data for the processor. A part of the memory may further include a non-volatile random access memory (NVRAM).

Optionally, the memory stores an executable software module or a data structure, and the processor 1401 may perform a corresponding operation by invoking an operation instruction (the operation instruction may be stored in an operating system) stored in the memory.

Optionally, the chip 140 may be used in the electronic device in the embodiments of this application. Optionally, the interface circuit 1402 may be configured to output an execution result of the processor 1401. For the interaction method provided in one or more embodiments of this application, refer to the foregoing embodiments. Details are not described herein again.

It should be noted that functions corresponding to each of the processor 1401 and the interface circuit 1402 may be implemented by using a hardware design, may be implemented by using a software design, or may be implemented by combining software and hardware. This is not limited herein.

The foregoing descriptions about implementations allow a person skilled in the art to understand that, for the purpose of convenient and brief description, division of the foregoing function modules is taken as an example for illustration. In actual application, the foregoing functions can be allocated to different modules and implemented according to a requirement. In other words, an inner structure of an apparatus is divided into different function modules to implement all or some of the functions described above.

In the several embodiments provided in this application, it should be understood that the disclosed apparatus and method may be implemented in other manners. For example, the described apparatus embodiment is merely an example. For example, the module or unit division is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions of this application essentially, or the part contributing to the conventional technology, or all or some of the technical solutions may be implemented in the form of a software product. The software product is stored in a storage medium and includes several instructions for instructing a device (which may be a single-chip microcomputer, a chip or the like) or a processor (processor) to perform all or some of the steps of the methods described in the embodiments of this application. The foregoing storage medium includes: any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application.

## Claims

1. An interaction method, applied to a smart cockpit, wherein the method comprises:

obtaining (401, 1101)) first spatial coordinates of a finger, wherein the first spatial coordinates are coordinates in a three-dimensional coordinate system;
determining (402, 1103), based on the first spatial coordinates, a first direction to which the finger points; and
adjusting (403, 1104) a parameter of a target device, or displaying information about a target object (802) based on the first direction,
wherein the obtaining first spatial coordinates of the finger comprises:

obtaining image coordinates of the finger in an image shot by a camera (202), wherein the image coordinates of the finger are coordinates in a two-dimensional coordinate system; the method being **characterized in** further comprising:
obtaining (404, 1105) the first spatial coordinates based on the image coordinates of the finger, an intrinsic parameter matrix of the camera (202), and a physical transformation matrix, wherein the intrinsic parameter matrix of the camera (202) and the physical transformation matrix are used to indicate a transformation relationship between the two-dimensional coordinate system and the three-dimensional coordinate system, wherein the method further comprises:

obtaining (405, 1106) image coordinates of a plurality of estimation points and spatial coordinates of the plurality of estimation points in the image shot by the camera (202), wherein the image coordinates of the plurality of estimation points are coordinates in the two-dimensional coordinate system, and the spatial coordinates of the plurality of estimation points are coordinates in the three-dimensional coordinate system corresponding to corner points of components in the smart cockpit; and
obtaining (406, 1107) the physical transformation matrix based on the intrinsic parameter matrix of the camera (202), the image coordinates of the plurality of estimation points, and the spatial coordinates of the plurality of estimation points.

2. The method according to claim 1, wherein before the obtaining first spatial coordinates of a finger, the method further comprises:

obtaining second spatial coordinates of the finger, wherein the second spatial coordinates are coordinates in the three-dimensional coordinate system;
determining, based on the second spatial coordinates, a second direction to which the finger points; and
determining a device at the second direction as the target device.

3. The method according to claim 1 or 2, wherein the obtaining first spatial coordinates of a finger comprises:

obtaining the first spatial coordinates of the finger when detecting, within a preset time period, that a direction to which the finger points falls within a first range, wherein the first range is a range in which an included angle with an initial direction of the finger is less than or equal to a first threshold, and the initial direction is a finger direction that is detected at an initial moment of the preset time period.

4. The method according to any one of claims 1 to 3, wherein the camera (202) is a monocular camera.

5. The method according to any one of claims 1 to 4, wherein the camera (202) used for obtaining the first spatial coordinates of the finger is the only camera used.

6. The method according to claim 4, wherein the image coordinates of the finger are coordinates of key pixels of the finger in the image shot by the camera (202), the key pixels of the finger include a plurality of pixels that reflect a direction to which the finger points and include at least two pixels on finger joints.

7. The method according to any one of claims 1 to 3, wherein the camera (202) is a monocular camera, a binocular camera, or a depth camera.

8. The method according to any one of claims 1 to 7, wherein the target object (802) is an object in an interaction area (803); and the interaction area (803) is an area covered by the first direction.

9. The method according to claim 1, wherein the two-dimensional coordinate system is a coordinate system corresponding to the camera (202); and the three-dimensional coordinate system is a coordinate system corresponding to a three-dimensional model of the smart cockpit, or a coordinate system corresponding to a three-dimensional drawing of the smart cockpit.

10. The method according to any one of claims 1 to 9, wherein the smart cockpit is a cockpit in a vehicle, and the adjusting a parameter of a target device based on the first direction comprises:

   adjusting a parameter of a window in the vehicle based on the first direction; or
   adjusting a parameter of a sunroof in the vehicle based on the first direction; or
   adjusting a parameter of an air conditioner in the vehicle based on the first direction.

11. An electronic device (300), wherein the electronic device (300) is applied to a smart cockpit, and the electronic device (300) comprises means configured to carry out the method of any one of claims 1 to 10.

12. A vehicle, comprising the electronic device according to claim 11.

13. A computer-readable storage medium comprising instructions which, when executed by a computer, cause the computer to carry out the method according to any one of claims 1 to 10.

14. A computer program product comprising instructions which, when the computer program is executed by a computer, cause the computer to carry out the method according to any one of claims 1 to 10.


**Patentansprüche**

1. Interaktionsverfahren, das auf ein smartes Cockpit angewendet wird, wobei das Verfahren Folgendes umfasst:

   Erhalten (401, 1101) erster Raumkoordinaten eines Fingers, wobei die ersten Raumkoordinaten Koordinaten in einem dreidimensionalen Koordinatensystem sind;
   Bestimmen (402, 1103), basierend auf den ersten Raumkoordinaten, einer ersten Richtung, in die der Finger zeigt, und
   Einstellen (403, 1104) eines Parameters einer Zielvorrichtung oder Anzeigen von Informationen zu einem Zielobjekt (802) basierend auf der ersten Richtung,
   wobei das Erhalten erster Raumkoordinaten des Fingers Folgendes umfasst:

   Erhalten von Bildkoordinaten des Fingers in einem durch eine Kamera (202) aufgenommenen Bild, wobei die Bildkoordinaten des Fingers Koordinaten in einem zweidimensionalen Koordinatensystem sind;
   wobei das Verfahren **dadurch gekennzeichnet ist, dass** es ferner Folgendes umfasst:

   Erhalten (404, 1105) der ersten Raumkoordinaten basierend auf den Bildkoordinaten des Fingers, einer intrinsischen Parametermatrix der Kamera (202) und einer physischen Transformationsmatrix, wobei die intrinsische Parametermatrix der Kamera (202) und die physische Transformationsmatrix genutzt werden, um eine Transformationsbeziehung zwischen dem zweidimensionalen Koordinatensystem und
   dem dreidimensionalen Koordinatensystem anzugeben,
   wobei das Verfahren ferner Folgendes umfasst:

   Erhalten (405, 1106) von Bildkoordinaten einer Vielzahl von Schätzpunkten und Raumkoordinaten der Vielzahl von Schätzpunkten in dem durch die Kamera (202) aufgenommenen Bild, wobei die Bildkoordinaten der Vielzahl von Schätzpunkten Koordinaten in dem zweidimensionalen Koordinatensystem sind und die Raumkoordinaten der Vielzahl von Schätzpunkten Koordinaten in dem dreidimensionalen Koordinatensystem sind, die mit Eckpunkten von Komponenten in dem smarten Cockpit korrespondieren; und
   Erhalten (406, 1107) der physischen Transformationsmatrix basierend auf der intrinsischen Parametermatrix der Kamera (202), den Bildkoordinaten der Vielzahl von Schätzpunkten und den Raumkoordinaten der Vielzahl von Schätzpunkten.

2. Verfahren nach Anspruch 1, wobei das Verfahren vor dem Erhalten erster Raumkoordinaten eines Fingers ferner Folgendes umfasst:

   Erhalten zweiter Raumkoordinaten des Fingers, wobei die zweiten Raumkoordinaten Koordinaten in dem dreidimensionalen Koordinatensystem sind;

Bestimmen, basierend auf den zweiten Raumkoordinaten, einer zweiten Richtung, in die der Finger zeigt, und Bestimmen einer Vorrichtung an der zweiten Richtung als die Zielvorrichtung.

3. Verfahren nach Anspruch 1 oder 2, wobei das Erhalten erster Raumkoordinaten eines Fingers Folgendes umfasst: Erhalten der ersten Raumkoordinaten des Fingers, wenn innerhalb eines vorgegebenen Zeitraums detektiert wird, dass eine Richtung, in die der Finger zeigt, in einen ersten Bereich fällt, wobei der erste Bereich ein Bereich ist, in dem ein eingeschlossener Winkel mit einer Anfangsrichtung des Fingers kleiner als oder gleich einem ersten Schwellenwert ist, und die Anfangsrichtung eine Fingerrichtung ist, die zu einem Anfangszeitpunkt des vorgegebenen Zeitraums detektiert wird.

4. Verfahren nach einem der Ansprüche 1 bis 3, wobei die Kamera (202) eine monokulare Kamera ist.

5. Verfahren nach einem der Ansprüche 1 bis 4, wobei die zum Erhalten der ersten Raumkoordinaten des Fingers genutzte Kamera (202) die einzige genutzte Kamera ist.

6. Verfahren nach Anspruch 4, wobei die Bildkoordinaten des Fingers Koordinaten von Schlüsselpixeln des Fingers in dem durch die Kamera (202) aufgenommenen Bild sind, wobei die Schlüsselpixel des Fingers eine Vielzahl von Pixeln enthalten, die eine Richtung, in die der Finger zeigt, widerspiegeln und mindestens zwei Pixel auf Fingergelenken enthalten.

7. Verfahren nach einem der Ansprüche 1 bis 3, wobei die Kamera (202) eine monokulare Kamera, eine binokulare Kamera oder eine Tiefenkamera ist.

8. Verfahren nach einem der Ansprüche 1 bis 7, wobei das Zielobjekt (802) ein Objekt in einem Interaktionsbereich (803) ist, und der Interaktionsbereich (803) ein von der ersten Richtung abgedeckter Bereich ist.

9. Verfahren nach Anspruch 1, wobei das zweidimensionale Koordinatensystem ein mit der Kamera (202) korrespondierendes Koordinatensystem ist, und das dreidimensionale Koordinatensystem ein mit einem dreidimensionalen Modell des smarten Cockpits korrespondierendes Koordinatensystem oder ein mit einer dreidimensionalen Zeichnung des smarten Cockpits korrespondierendes Koordinatensystem ist.

10. Verfahren nach einem der Ansprüche 1 bis 9, wobei das smarte Cockpit ein Cockpit in einem Fahrzeug ist und das Einstellen eines Parameters einer Zielvorrichtung basierend auf der ersten Richtung Folgendes umfasst:

Einstellen eines Parameters eines Fensters in dem Fahrzeug basierend auf der ersten Richtung, oder Einstellen eines Parameters eines Schiebedachs in dem Fahrzeug basierend auf der ersten Richtung, oder Einstellen eines Parameters einer Klimaanlage in dem Fahrzeug basierend auf der ersten Richtung.

11. Elektronische Vorrichtung (300), wobei die elektronische Vorrichtung (300) auf ein smartes Cockpit angewendet wird und die elektronische Vorrichtung (300) zum Durchführen des Verfahrens nach einem der Ansprüche 1 bis 10 konfigurierte Einrichtungen umfasst.

12. Fahrzeug, das die elektronische Vorrichtung nach Anspruch 11 umfasst.

13. Computerlesbares Speichermedium, das Anweisungen umfasst, die, wenn sie durch einen Computer ausgeführt werden, bewirken, dass der Computer das Verfahren nach einem der Ansprüche 1 bis 10 durchführt.

14. Computerprogrammprodukt, das Anweisungen umfasst, die, wenn das Computerprogramm durch einen Computer ausgeführt wird, bewirken, dass der Computer das Verfahren nach einem der Ansprüche 1 bis 10 durchführt.

**Revendications**

1. Procédé d'interaction, appliqué à un cockpit intelligent, le procédé comprenant les étapes consistant à :

obtenir (401, 1101) des premières coordonnées spatiales d'un doigt, les premières coordonnées spatiales étant des coordonnées dans un système de coordonnées tridimensionnel ; déterminer (402, 1103), sur la base des premières coordonnées spatiales, une première direction dans laquelle le doigt pointe ; et

régler (403, 1104) un paramètre d'un dispositif cible, ou afficher des informations concernant un objet cible (802) sur la base de la première direction,

dans lequel l'obtention de premières coordonnées spatiales du doigt consiste à :

obtenir des coordonnées d'image du doigt dans une image capturée par une caméra (202), les coordonnées d'image du doigt étant des coordonnées dans un système de coordonnées bidimensionnel ;

le procédé étant **caractérisé en ce qu'**il comprend également l'étape consistant à :

obtenir (404, 1105) les premières coordonnées spatiales sur la base des coordonnées d'image du doigt, d'une matrice de paramètres intrinsèque de la caméra (202) et d'une matrice de transformation physique, la matrice de paramètres intrinsèque de la caméra (202) et la matrice de transformation physique étant utilisées pour indiquer une relation de transformation entre le système de coordonnées bidimensionnel et le système de coordonnées tridimensionnel,

le procédé comprenant également l'étape consistant à :

obtenir (405, 1106) des coordonnées d'image d'une pluralité de points d'estimation et des coordonnées spatiales de la pluralité de points d'estimation dans l'image capturée par la caméra (202), les coordonnées d'image de la pluralité de points d'estimation étant des coordonnées dans le système de coordonnées bidimensionnel, et les coordonnées spatiales de la pluralité de points d'estimation étant des coordonnées dans le système de coordonnées tridimensionnel correspondant aux points de sommet de composants du cockpit intelligent ; et

obtenir (406, 1107) la matrice de transformation physique sur la base de la matrice de paramètres intrinsèque de la caméra (202), des coordonnées d'image de la pluralité de points d'estimation et des coordonnées spatiales de la pluralité de points d'estimation.

2. Procédé selon la revendication 1, le procédé, avant l'obtention de premières coordonnées spatiales d'un doigt, comprenant également les étapes consistant à :

obtenir des deuxièmes coordonnées spatiales du doigt, les deuxièmes coordonnées spatiales étant des coordonnées dans le système de coordonnées tridimensionnel ;

déterminer, sur la base des deuxièmes coordonnées spatiales, une deuxième direction dans laquelle le doigt pointe ; et

déterminer un dispositif situé dans la deuxième direction comme dispositif cible.

3. Procédé selon la revendication 1 ou 2, dans lequel l'obtention de premières coordonnées spatiales d'un doigt consiste à :

obtenir les premières coordonnées spatiales du doigt lors de la détection, au cours d'une période de temps prédéfinie, du fait qu'une direction dans laquelle le doigt pointe se trouve à l'intérieur d'une première plage, la première plage étant une plage dans laquelle un angle inclus avec une direction initiale du doigt est inférieur ou égal à un premier seuil, et la direction initiale étant une direction de doigt qui est détectée à un instant initial de la période de temps prédéfinie.

4. Procédé selon l'une quelconque des revendications 1 à 3, dans lequel la caméra (202) est une caméra monoculaire.

5. Procédé selon l'une quelconque des revendications 1 à 4, dans lequel la caméra (202) utilisée pour obtenir les premières coordonnées spatiales du doigt est la seule caméra utilisée.

6. Procédé selon la revendication 4, dans lequel les coordonnées d'image du doigt sont des coordonnées de pixels clés du doigt dans l'image capturée par la caméra (202), et les pixels clés du doigt comprennent une pluralité de pixels qui reflètent une direction dans laquelle le doigt pointe et comprennent au moins deux pixels sur des articulations de doigt.

7. Procédé selon l'une quelconque des revendications 1 à 3, dans lequel la caméra (202) est une caméra monoculaire, une caméra binoculaire ou une caméra de profondeur.

8. Procédé selon l'une quelconque des revendications 1 à 7, dans lequel l'objet cible (802) est un objet situé dans une zone d'interaction (803) ; et la zone d'interaction (803) est une zone couverte par la première direction.

**9.** Procédé selon la revendication 1, dans lequel le système de coordonnées bidimensionnel est un système de coordonnées correspondant à la caméra (202) ; et le système de coordonnées tridimensionnel est un système de coordonnées correspondant à un modèle tridimensionnel du cockpit intelligent, ou un système de coordonnées correspondant à un dessin tridimensionnel du cockpit intelligent.

**10.** Procédé selon l'une quelconque des revendications 1 à 9, dans lequel le cockpit intelligent est un cockpit d'un véhicule, et le réglage d'un paramètre d'un dispositif cible sur la base de la première direction consiste à :

régler un paramètre d'une fenêtre du véhicule sur la base de la première direction ; ou
régler un paramètre d'un toit ouvrant du véhicule sur la base de la première direction ; ou
régler un paramètre d'un climatiseur du véhicule sur la base de la première direction.

**11.** Dispositif électronique (300), le dispositif électronique (300) étant appliqué à un cockpit intelligent, et le dispositif électronique (300) comprenant un moyen configuré pour mettre en oeuvre le procédé selon l'une quelconque des revendications 1 à 10.

**12.** Véhicule, comprenant le dispositif électronique selon la revendication 11.

**13.** Support de stockage lisible par ordinateur comprenant des instructions qui, lorsqu'elles sont exécutées par un ordinateur, amènent l'ordinateur à mettre en oeuvre le procédé selon l'une quelconque des revendications 1 à 10.

**14.** Produit-programme informatique comprenant des instructions qui, lorsque le programme informatique est exécuté par un ordinateur, amènent l'ordinateur à mettre en oeuvre le procédé selon l'une quelconque des revendications 1 à 10.

FIG. 1

FIG. 2

300

301    307    303

| Processor | Processor |
|-----------|-----------|
| CPU 0 | CPU 0 |
| CPU 1 | CPU 1 |

Communications
line 302

Memory

304    305    306

| Communications interface | Output device | Input device |
|---|---|---|

FIG. 3

A head unit control apparatus obtains first spatial coordinates of a finger    401

The head unit control apparatus determines, based on the first spatial coordinates, a first direction to which the finger points    402

The head unit control apparatus adjusts a parameter of a target device, or displays information about a target object based on the first direction    403

FIG. 4

Hand frame

Key pixels of a finger

FIG. 5(a)                    FIG. 5(b)

Spatial coordinates of a finger

Direction to which
the finger points

Fitted straight line

FIG. 6

FIG. 7(a)

FIG. 7(b)

FIG. 7(c)

FIG. 8

A head unit control apparatus obtains an internal parameter matrix of a camera — 404

The head unit control apparatus obtains image coordinates of a plurality of estimated points and spatial coordinates of the plurality of estimated points in an image shot by the camera — 405

The head unit control apparatus obtains a physical transformation matrix based on the internal parameter matrix of the camera, the image coordinates of the plurality of estimation points, and the spatial coordinates of the plurality of estimation points — 406

The head unit control apparatus obtains first spatial coordinates of the finger — 401

The head unit control apparatus determines, based on the first spatial coordinates, a first direction to which the finger points — 402

The head unit control apparatus adjusts a parameter of a target device, or displays information about a target object based on the first direction — 403

FIG. 9

Estimation point

Estimation point

FIG. 10

Camera

Head unit control apparatus

1101

Obtain first spatial coordinates of a finger

1102: Information about the first spatial coordinates

Determine, based on the first spatial coordinates, a first direction to which the finger points

1103

Adjust a parameter of a target device, or display information about a target object based on the first direction

1104

FIG. 11

```
                    ┌──────────────┐                        ┌──────────────────┐
                    │   Camera     │                        │ Head unit control│
                    │              │                        │    apparatus     │
                    └──────┬───────┘                        └────────┬─────────┘
                           │                                         │
        ┌──────────────────────────────────┐                        │
  1105 ─┤   Obtain an internal parameter    │                        │
        │       matrix of the camera        │                        │
        └──────────────────────────────────┘                        │
        ┌──────────────────────────────────┐                        │
        │  Obtain image coordinates of a    │                        │
  1106 ─┤ plurality of estimated points and │                        │
        │ spatial coordinates of the plurality                       │
        │ of estimated points in an image   │                        │
        │       shot by the camera          │                        │
        └──────────────────────────────────┘                        │
        ┌──────────────────────────────────┐                        │
        │ Obtain a physical transformation  │                        │
        │   matrix based on the internal    │                        │
  1107 ─┤ parameter matrix of the camera,   │                        │
        │   the image coordinates of the    │                        │
        │ plurality of estimation points, and                        │
        │   the spatial coordinates of the  │                        │
        │  plurality of estimation points   │                        │
        └──────────────────────────────────┘                        │
        ┌──────────────────────────────────┐                        │
  1101 ─┤ Obtain first spatial coordinates of a                      │
        │            finger                 │                        │
        └──────────────────────────────────┘                        │
                           │   1102: Information about               │
                           │    the first spatial coordinates        │
                           │────────────────────────────────────────▶│
                           │                        ┌────────────────────────────────┐
                           │                        │  Determine, based on the first │─ 1103
                           │                        │ spatial coordinates, a first direction
                           │                        │   to which the finger points   │
                           │                        └────────────────────────────────┘
                           │                        ┌────────────────────────────────┐
                           │                        │   Adjust a parameter of a target│─ 1104
                           │                        │  device, or display information │
                           │                        │ about a target object based on the
                           │                        │         first direction         │
                           │                        └────────────────────────────────┘
                           │                                         │
```

FIG. 12

Electronic device

Obtaining module — 1301

Determining module — 1302

FIG. 13

Chip 140

Processor 1401

Bus 1403

Interface circuit 1402

FIG. 14

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20160170495 A1
- US 20170024015 A1
- US 20140232631 A1

- US 20190302895 A1
- EP 1292877 B1

**Non-patent literature cited in the description**

- **KOTA IRIE et al.** 3D Measurement by Distributed Camera System for Constructing an Intelligent Room. *NETWORKED SENSING SYSTEMS,* 01 June 2007, 118-121